# EUROPÄISCHE PATENTANMELDUNG

(11) **EP 0 908 711 A1**
(43) Veröffentlichungstag der Anmeldung: **14.04.1999**
(21) Anmeldenummer: 97117623.5
(22) Anmeldetag: 09.10.1997
(51) Int. Cl.: G01K 1/00, G01K 1/14

(54) **Befestigungsmittel für Temperaturfühler**

(71) Anmelder: Etheco Sales and Development Corp., 6300 Zug (CH)
(72) Erfinder: Reifers, Alfred, 8910 Affoltern am Albis (CH); Kramer, Johannes, 6300 Zug (CH); Moser, Andres, Dipl. Masch. Ing. HTL, 6312 Steinhausen (CH)
(74) Vertreter: Nünlist, Hans

(57) **Zusammenfassung**

Ein Befestigungsmittel für wenigstens einen Temperaturfühler (6) an einem Rohr (4) ist als Spannband (1) mit einem wellblechartigen Teil (2) ausgebildet. Nach der Montage des Spannbandes (1) am Rohr (4) können der oder die Temperaturfühler (6) in Vertiefungen (5) des wellblechartigen Teiles (2) gesteckt werden. Das wellblechartige Teil (2) wirkt als Federelement, wodurch eine rutschfreie Montage des Spannbandes (1) am Rohr (4) gewährleistet ist. Ein abgewinkelter Stab (7) kann wie ein Temperaturfühler (6) in eine Vertiefung (5) des wellblechartigen Teiles (2) gesteckt werden. Am anderen Ende des Stabes kann ein Steuer- und/oder Regelgerät befestigt werden. Das Befestigungsmittel ermöglicht eine problemlose thermische Isolierung des Rohres (4).

## Beschreibung

Die Erfindung betrifft ein Befestigungsmittel für Temperaturfühler der im Oberbegriff des Anspruchs genannten Art.

Solche Befestigungsmittel eignen sich zur Befestigung von Temperaturfühlern mit langen Kapillarrohren bzw. elektrischen Leitungen aussen an Rohrleitungen von Wärmeerzeugungsanlagen.

Der Erfindung liegt die Aufgabe zugrunde, ein Befestigungsmittel vorzuschlagen, mit dem sich ein oder mehrere Temperaturfühler herkömmlicher zylinderförmiger oder profilförmiger Gestalt einfach an einem Rohr montieren lassen.

Die Erfindung besteht in den im Anspruch 1 angegebenen Merkmalen. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen:
- Fig. 1: ein Spannband in der Draufsicht,
- Fig. 2: das Spannband in Seitenansicht,
- Fig. 3: das an einem Rohr montierte Spannband und
- Fig. 4: den Querschnitt eines runden und eines profilförmigen Temperaturfühlers.

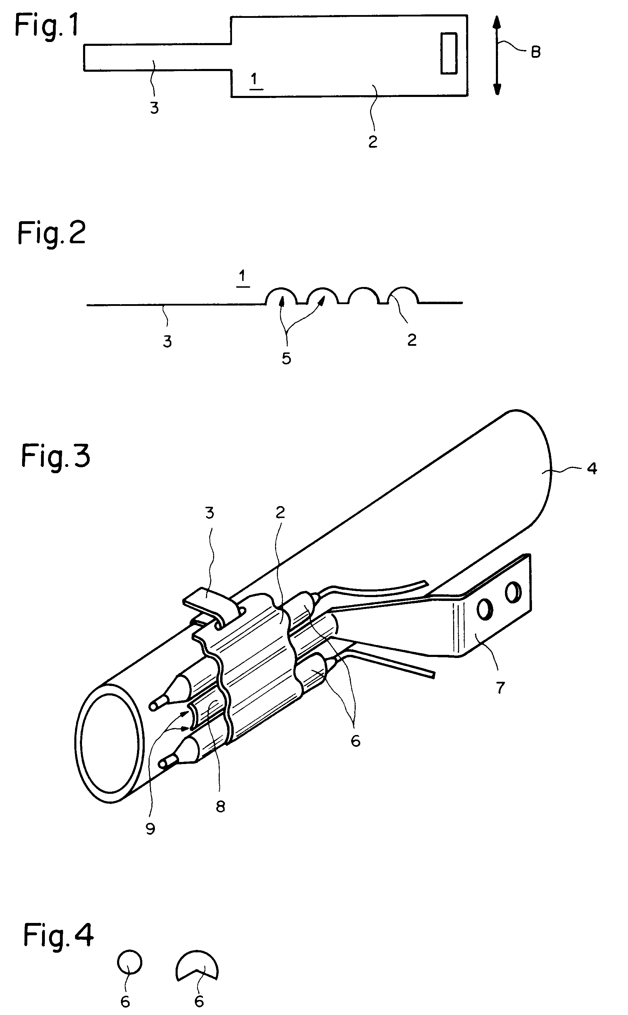

Die Fig. 1 und 2 zeigen ein Befestigungsmittel für herkömmliche Temperaturfühler, die eine längliche, runde oder profilförmige Form aufweisen, in der Draufsicht bzw. in Seitenansicht. Das Befestigungsmittel ist ein aus einem Stück Blech gestanztes Spannband 1. Das Spannband 1 weist ein wellblechartiges Teil 2 und eine Zunge 3 auf. Bei der Montage des Spannbandes 1 an einem Rohr 4 wird die Zunge 3, wie in der Fig. 3 gezeigt ist, um das Rohr 4 herum geführt, durch eine Öffnung am Teil 2 gesteckt und satt angezogen. In jede Vertiefung 5 des wellblechartigen Teiles 2 kann ein Temperaturfühler 6 hineingeschoben werden. Dabei erhöht sich die Zugspannung des Spannbandes 1 soweit, dass das Spannband 1 rutschfest am Rohr 4 fixiert ist und dass der oder die Temperaturfühler 6 unter Druck am Rohr 4 anliegen. Zur Gewährleistung eines optimalen Wärmeüberganges sind im Bereich der Temperaturfühler 6 die Farbe oder andere nicht metallische Schutzüberzüge zu entfernen. Die Breite B des Spannbandes 1 ist derart bemessen, dass die länglichen Temperaturfühler 6 automatisch parallel zur Rohrachse ausgerichtet am Rohr 4 anliegen, so dass sich insgesamt ein gute thermische Ankopplung der Temperaturfühler 6 an das Rohr 4 ergibt.

Die Fig. 4 zeigt den Querschnitt eines runden und den Querschnitt eines profilförmigen Temperaturfühlers 6. Beim profilförmigen Temperaturfühler 6 ist die Fläche, die das Rohr 4 berührt, doppelt so gross wie beim runden Temperaturfühler 6, was die Wärmeankopplung verbessert. Die flüssigkeitsgefüllten oder elektronischen Temperaturfühler 6 sind über Kapillarrohre bzw. elektrische Leitungen mit einem Steuer- und/oder Regelgerät verbunden. Da das Steuer- und/oder Regelgerät nicht am Rohr 4 direkt angebracht ist, kann das Rohr 4 auch im Bereich der Temperaturfühler 6 problemlos thermisch isoliert werden. Infolge der guten thermischen Ankopplung und der Isolation wird erreicht, dass die Temperaturfühler 6 die Temperatur der im Rohr zirkulierenden Flüssigkeit mit grosser Genauigkeit erfassen, wodurch sich auch die Regelschwankungen des Regelkreises vermindern.

Als Material für das Spannband 1 wird bevorzugt rostfreier Stahl mit hoher Zugfestigkeit verwendet, damit die Temperaturfühler 6 auch langfristig satt am Rohr 4 anliegen. Ein einziges Spannband 1 eignet sich für:
- Rohre mit Durchmesser ½" bis 4",
- Temperaturfühlerdurchmesser von 5 bis 10 mm,
- die gleichzeitige Befestigung von 1 bis 4 Temperaturfühlern 6,
- die gleichzeitige Befestigung von Temperaturfühlern 6 unterschiedlicher Durchmesser.

Zur einfachen Montage eines zu dem oder den Temperaturfühlern 6 gehörenden Steuer- und/oder Regelgerätes oder eines anderen Zubehörteiles, usw. ist bei Bedarf ein abgewinkelter Stab 7 vorgesehen, dessen eines Ende wie ein Temperaturfühler 6 zylinderförmig, profilförmig oder, wie in der Fig. 3 dargestellt, als halbrund gebogenes Blechteil 8 mit zwei Auflagekanten 9 ausgebildet ist und der daher wie ein Temperaturfühler 6 in eine Vertiefung 5 steckbar ist. Die beiden letzteren Ausführungsarten gewährleisten eine stabile, auch unter dem Einfluss der Gravitation nicht verdrehbare Lage des Steuer- und/oder Regelgerätes. Das andere Ende des Stabes 7 ist so ausgebildet, dass daran das Steuer- und/oder Regelgerät in einem vorbestimmten Abstand vom Rohr 4 befestigbar ist. Die thermische Isolierung des Rohres 4 ist somit auch möglich, wenn das Steuer- und/oder Regelgerät in der Nähe des Rohres 4 angebracht werden muss.

## Patentansprüche

1. Befestigungsmittel für wenigstens einen Temperaturfühler (6) an einem Rohr (4), **dadurch gekennzeichnet, dass** das Befestigungsmittel ein Spannband (1) mit einem wellblechartigen Teil (2) ist, wobei nach der Montage des Spannbandes (1) am Rohr (4) der oder die Temperaturfühler (6) in die Vertiefungen (5) des wellblechartigen Teiles (2) gesteckt werden können.

2. Befestigungsmittel nach Anspruch 1, **dadurch gekennzeichnet**, dass das wellblechartige Teil (2) als Federelement wirkt, wodurch eine rutschfreie Montage des Spannbandes (1) am Rohr (4) gewährleistet ist.

3. Befestigungsmittel nach Anspruch 1 oder 2, **dadurch gekennzeichnet, dass** es abgewinkelten Stab (7) mitumfasst, dessen eines Ende in eine Vertiefung (5) des wellblechartigen Teiles (2) steckbar ist, so dass beispielsweise ein Steuer- und/oder Regelgerät in einem vorbestimmten Abstand zum Rohr (4) befestigbar ist.

4. Befestigungsmittel nach Anspruch 3, **dadurch gekennzeichnet, dass** das Ende des Stabes (7), das in eine Vertiefung (5) des wellblechartigen Teiles (2) steckbar ist, profilförmig oder als gebogenes Blechteil (8) mit zwei Auflagekanten (9) ausgebildet ist.
